(19) Europäisches Patentamt
European Patent Office
Office européen des brevets

(11) **EP 2 397 723 A1**

(12) **EUROPEAN PATENT APPLICATION**
published in accordance with Art. 153(4) EPC

(43) Date of publication:
**21.12.2011 Bulletin 2011/51**

(51) Int Cl.:
*F16H 15/52* (2006.01)  *F16H 37/02* (2006.01)

(21) Application number: **09839983.5**

(22) Date of filing: **10.02.2009**

(86) International application number:
**PCT/JP2009/052187**

(87) International publication number:
**WO 2010/092661 (19.08.2010 Gazette 2010/33)**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(71) Applicant: **Toyota Jidosha Kabushiki Kaisha Toyota-shi, Aichi 471-8571 (JP)**

(72) Inventors:
• **OGAWA, Hiroyuki**
  **Toyota-shi**
  **Aichi 471-8571 (JP)**

• **TOMOMATSU, Daisuke**
  **Toyota-shi**
  **Aichi 471-8571 (JP)**
• **MURAKAMI, Akira**
  **Toyota-shi**
  **Aichi 471-8571 (JP)**

(74) Representative: **Kuhnen & Wacker**
  **Patent- und Rechtsanwaltsbüro**
  **Prinz-Ludwig-Strasse 40A**
  **85354 Freising (DE)**

(54) **CONTINUOUSLY VARIABLE TRANSMISSION MECHANISM AND GEARBOX EMPLOYING CONTINUOUSLY VARIABLE TRANSMISSION MECHANISM**

(57)    To provide a continuously variable transmission adapted to set a sped change ratio in accordance with a tilt angle of a rolling member mediating a torque being transmitted, and to transmit a torque among three elements.

The continuously variable transmission mechanism 1 is provided with a rolling member 4 having a smooth outer face and capable of tilting a rotational center axis thereof, and a rotary member arranged to be contacted with a predetermined portion of the outer face of the rolling member in a torque transmittable manner. Specifically, the continuously variable transmission mechanism 1 is configured to vary a rotational speed of the rotary member by changing a rotation radius of a contact point between the rolling member and the rotary member 4 by tilting the rotational center axis of the rolling member. For this purpose, the continuously variable transmission mechanism 1 comprises: a first rotary member 2 and 3 whose outer circumferential face is contacted with the rolling member 4; and a second rotary member 25 and 26 and a third rotary member, which are contacted with the outer face of the rolling member 4 in a torque transmittable manner at a side opposite to a side to which the first rotary member is contacted, and which are adapted to rotate relatively with the first rotary member.

Fig. 1

EP 2 397 723 A1

## Description

TECHNICAL FIELD

This invention relates to a continuously variable transmission mechanism adapted to vary a speed change ratio as a ratio between an input speed and an output speed, and a transmission using said continuously variable transmission mechanism.

BACKGROUND ART

In a known mechanism for varying a speed change ratio continuously, a rolling member such as a disc and a roller is interposed between a member of driving side and a member of driven side. According to the known mechanism of this kind, the speed change ratio is varied continuously by changing a connecting state between the member of driving side or driven side. For example, a toroidal type continuously variable transmission is known as the mechanism of this kind. Another example is disclosed in Japanese Patent Laid-Opens No. 6-257655 and No. 2008-75878. The continuously variable transmission disclosed therein is provided with a ball capable of tilting a rotation axis thereof, and members of driving and driven sides are contacted with an outer face of the ball in a torque transmittable manner. According to the transmission taught by the above-mentioned publications, a radius between the center of the ball and a contact point at which the member of the driving side is contacted, and a radius between the center of the ball and a contact point at which the member of the driven side, are varied continuously by tilting the rotational axis of the ball.

Specifically, the rotating speed converter taught by Japanese Patent Laid-Open No. 6-257655 comprises a driving shaft having a tapered face on its outer face, and a ball held on the tapered face in a manner like a planet. According to teachings of Japanese Patent Laid-Open No. 6-257655, a first rotation means and a second rotation means are arranged to be contacted with a different portions of the outer face of the ball in a torque transmittable manner, and a differential action is achieved by rotating and revolving the ball as a planetary pinion. A ratio between rotational speeds of the first and the second rotation means is varied by changing contact point between the ball and the tapered face, or changing a radius from the contact point with respect to the ball.

Meanwhile, the continuously variable transmission taught by Japanese Patent Laid-Open No. 2008-75878 is provided with a main shaft and a support member fitted onto the main shaft in a rotatable manner. According to teachings of Japanese Patent Laid-Open No. 2008-75878, a ball is allowed to vary a tilt angle of its rotational axis with respect to the main shaft, and contacted with an outer face of the support member. In addition, a driving member and a driven member are contacted with the ball in a torque transmittable manner at two portions of the outer face of the ball. Therefore, according to the continuously variable transmission taught by Japanese Patent Laid-Open No. 2008-75878, a rotation radius of a contact point between the ball and the driving member, and a rotation radius of a contact point between the ball and the driven member are varied by changing a tilt angle of the rotational center axis of the ball. As a result, a speed change ratio as a ratio between rotational speeds of the driving and driven members is varied.

In addition, Japanese Patent Laid-Open No. 2006-527337 discloses a twin-clutch transmission for a vehicle. The twin-clutch transmission taught by Japanese Patent Laid-Open No. 2006-527337 is provided with two intermediate shafts to be connected selectively with an input shaft through a clutch, and a plurality of gear pairs are arranged between the output shaft and the intermediate shafts. According to the twin-clutch transmission taught by Japanese Patent Laid-Open No. 2006-527337, a speed change ratio is set according to gear ratios of the gear pairs by connecting the gear pair with the intermediate shaft or the output shaft by a shifting element such as a synchronizer.

As described, the rotating speed converter taught by Japanese Patent Laid-Open No. 6-257655 is configured to perform a differential action. Therefore, a ratio between a rotational speed of one of the rotation means contacted with the outer surface of the ball, that is, the driven member, and a rotational speed of the driving shaft is varied by halting and rotating the other rotation means. That is, the rotating speed converter taught by Japanese Patent Laid-Open No. 6-257655 is configured to transmit the power from the driving shaft to the driven shaft, and to vary the speed change ratio between the driving shaft and the driven shaft. Therefore, in case of applying the rotating speed converter taught by Japanese Patent Laid-Open No. 6-257655 to a mechanism configured to transmit the power from the input shaft while splitting the power to two intermediate shafts, e.g., to the transmission taught by Japanese Patent Laid-Open No. 2006-527337, two sets of the rotating speed converter is required. In this case, the mechanism is enlarged and a complicated control is required to control the mechanism thus enlarged.

The continuously variable transmission taught by Japanese Patent Laid-Open No. 2008-75878 is capable of varying a ratio between rotational speeds of the driving member and the driven member continuously However, as the rotating speed converter taught by Japanese Patent Laid-Open No. 6-257655, the continuously variable transmission taught by Japanese Patent Laid-Open No. 2008-75878 is configured to transmit the power between two members, and to vary a ratio between rotational speeds of the two members. Therefore, in case of using the continuously variable transmission taught by Japanese Patent Laid-Open No. 2008-75878 instead of the clutch in the transmission taught by Japanese Patent Laid-Open No. 2006-527337, two continuously variable transmissions are also required. That is, the mechanism is also enlarged in this case, and a complicated control is required to control the mechanism thus enlarged.

DISCLOSURE OF THE INVENTION

The present invention has been conceived noting the technical problems thus far described, and its object is to provide a continuously variable transmission mechanism, and a transmission using the continuously variable transmission mechanism, which is capable of transmitting a torque among three rotary elements, and capable of continuously varying a speed change ratio between an input element and one of output elements, and a speed change ratio between the input element and the other output element.

In order to achieve the above-mentioned object, according to the present invention, there is provided a continuously variable transmission mechanism, which has a rolling member having a smooth outer face and capable of tilting a rotational center axis thereof, and a rotary member arranged to be contacted with a predetermined portion of the outer face of the rolling member in a torque transmittable manner, and which is configured to vary a rotational speed of the rotary member by tilting the rotational center axis of the rolling member to change a rotation radius of a contact point at which the rotary member is contacted with the rolling member in a torque transmittable manner, characterized by comprising: a first rotary member whose outer circumferential face is contacted with the rolling member; and a second rotary member and a third rotary member, which are contacted with the outer face of the rolling member in a torque transmittable manner at a side opposite to a side to which the first rotary member is contacted across the rotational center axis, and which are adapted to rotate relatively with the first rotary member.

According to the present invention, the continuously variable transmission mechanism further comprises: a tilt angle adjusting mechanism, which is adapted to incline the rolling member thereby changing an angle between the rotational center axis of the rolling member and the rotational center axis of the first rotary member in a plane including the rotational center axis of the first rotary member.

The second rotary member and the third rotary member are contacted with the outer face of the rolling member in a torque transmittable manner on both sides of the rolling member across a line passing through a center of the rolling member and a contact point at which the rolling member is contacted with the first rotary member. According to the continuously variable transmission mechanism, a rotational speed of one of the second and the third rotary members is lowered by inclining the rotational center axis of the rolling member in a manner to increase a rotational speed of the other rotary member.

More specifically, according to the present invention, there is provided a transmission using the above-explained continuously variable transmission mechanism, characterized by comprising: an input member, which is connected with the first rotary member; a first intermediate shaft, which is connected with the second rotary member; a second intermediate shaft, which is connected with the third rotary member; an output member, which is connected selectively with the first intermediate shaft and the second intermediate shaft in a torque transmittable manner; a first transmission mechanism, which is arranged between the first intermediate shaft and the output member, and which is adapted to set a ratio between rotational speeds of the first intermediate shaft and the output member to a predetermined ratio; a first switching mechanism, which is adapted to allow and to disable the first transmission mechanism to transmit the torque selectively; a second transmission mechanism, which is arranged between the second intermediate shaft and the output member, and which is adapted to set a ratio between rotational speeds of the second intermediate shaft and the output member to a ratio different from the ratio set by the first transmission mechanism; and a second switching mechanism, which is adapted to allow and to disable the second transmission mechanism to transmit the torque selectively.

According to the present invention, the first switching mechanism includes an engagement member adapted to connect the first transmission mechanism selectively with the first intermediate shaft and the output member, and the second switching mechanism includes another engagement member adapted to connect the second transmission mechanism selectively with the second intermediate shaft and the output member. In addition, the transmission of the present invention further comprises: a control means, which is adapted to connect the engagement member of one of the first and the second switching mechanisms with the intermediate shafts or the output member to be connected therewith, while disconnecting the engagement member of the other switching mechanism from the intermediate shaft or the output member being connected therewith, when the rotational speed of said one of the first and the second switching mechanisms is synchronized with the rotational speed of the intermediate shaft or the output shaft to be connected therewith, under the situation where the torque is being transmitted by the other switching mechanism.

In addition to above, according to the present invention, the first transmission mechanism and the second transmission mechanism include a pair of gears meshing with each other.

Further, according to the present invention, the first switching mechanism and the second switching mechanism include a dog clutch.

Thus, according to the present invention, the rolling member contacted with the outer face of the first rotary member is rotated when the first rotary member is rotated. As described, the second rotary member and the third rotary member are contacted with the outer face of the rolling member in a torque transmittable manner. Therefore, the torque is transmitted between the first rotary member and the second rotary member through the rolling member, and also between the first rotary member and the third rotary member through the rolling member. That is, the torque is transmitted among the three rotary elements. A circumferential velocity at a contact point between the rolling member and each rotary member is proportional to a distance between the contact point and the rotational center axis of the rolling member. Therefore, a rotation radius of the contact point between the rolling member and the rotary member is varied by changing an inclination angle of the rotational center axis of the rolling member. As described, the outer face of the rolling member is formed into a smooth curved face. Therefore, the rotation radius of the contact point between the rolling member and the rotary member is varied continuously For this reason, the speed change ratio between the first rotary member and the second rotary member, and a speed change ratio between the first rotary member and the third rotary member can be varied continuously

According to the present invention, the second rotary member and the third rotary member are contacted with the outer face of the rolling member on both sides of the rolling member across the maximum rotation radius of the rolling member. Therefore, the rotation radius of the contact point between the rolling member and any one of the rotary member is increased and the rotational radius of the contact point between the rolling member and the other rotary member is decreased by inclining the rolling member to change the tilt angle of the rotational center axis of the rolling member. That is, a speed change in a direction to increase a speed and a speed change operation in a direction to reduce a speed can be carried out simultaneously

In addition, according to the present invention, the first rotary member serves as an input element, and the second and the third rotary members serve as an output element. The second rotary element is to be connected selectively with the output member through the first intermediate shaft, the first transmission mechanism and the first switching mechanism, and on the other hand, the third rotary element is to be connected selectively with the output member through the second intermediate shaft, the second transmission mechanism and the second switching mechanism. As described, the rotational speed of the second rotary member or the third rotary member is varied continuously by inclining the rotational center axis of the rolling member. Therefore, the speed change ratio as a ratio between the rotational speeds of the input member and the output member can be varied continuously while transmitting the power to the output member through the first or second transmission member. That is, a continuous speed change operation can be carried out. The speed change ratio as the ratio between the rotational speeds of the input member and the output member is determined by a speed change ratio of the continuously variable transmission mechanism and a speed change ratio of each transmission mechanism, and in addition, the power can be transmitted selectively through the first transmission mechanism and through the second transmission mechanism. Therefore, in addition to the above-mentioned advantages, a variation range of the total speed change ratio of the transmission can be widened wider than the variation range of the speed change ratio varied by merely tilting the rolling member.

In addition to the above-explained advantage, the transmission of the present invention is capable of reducing the rotational speed of one of the rotary members simultaneously with increasing the rotational speed of the other rotary member by tilting the rolling member. Therefore, in case the power is being transmitted from one of the rotary members to the output member through a predetermined transmission mechanism, the rotational speed of the other transmission mechanism which is not transmitting the torque to the output member and the rotational speed of the output shaft or the intermediate shaft are synchronized gradually with each other by tilting the rolling member. In this synchronous situation, the engagement member being disengaged is engaged, and the engagement member being engaged is disengaged. For this reason, the transmission mechanism to be involved in a transmission of the torque to the output member can be shifted smoothly without changing the rotational speeds abruptly so that a resultant abrupt change in an inertia torque can be avoided.

In addition to above-explained advantages, according to the present invention, dog clutches are used as the switching mechanisms. Therefore, no slippage will occur even during transmitting the torque through the switching mechanism. For this reason, a power loss can be reduced. Especially, in case of using the dog clutch in the transmission as claimed in claim 5, the rotational speed will not be changed abruptly so that an occurrence of shocks resulting from an abrupt change in the rotational speed can be avoided.

BRIEF DESCRIPTION OF THE DRAWINGS

Fig. 1 is a partially omitted sectional view schematically showing one example of a continuously variable transmission mechanism according to the present invention.
Fig. 2 is a sectional view schematically showing one example of a tilt angle adjusting mechanism.
Figs. 3 (a) and 3 (b) are sectional views schematically showing operating states of the tilt angle adjusting mechanism.
Fig. 4 is an explanation drawing showing a mechanism of the continuously variable transmission mechanism shown in Fig. 1.

Fig. 5 is a diagram showing a relation between a tilt angle, and cos (α + β) and cos (α - β).

Fig. 6 is a diagram showing a relation between a tilt angle and rotational speeds of the discs in the continuously variable transmission mechanism.

Fig. 7 is a view schematically showing one example of a transmission using the continuously variable transmission mechanism shown in Fig. 1.

Figs. 8 (a) to (d) are diagrams explaining a relation between a tilt angle and rotational speeds of the intermediate shafts and the gear pairs.

BEST MODE FOR CARRYING OUT THE INVENTION

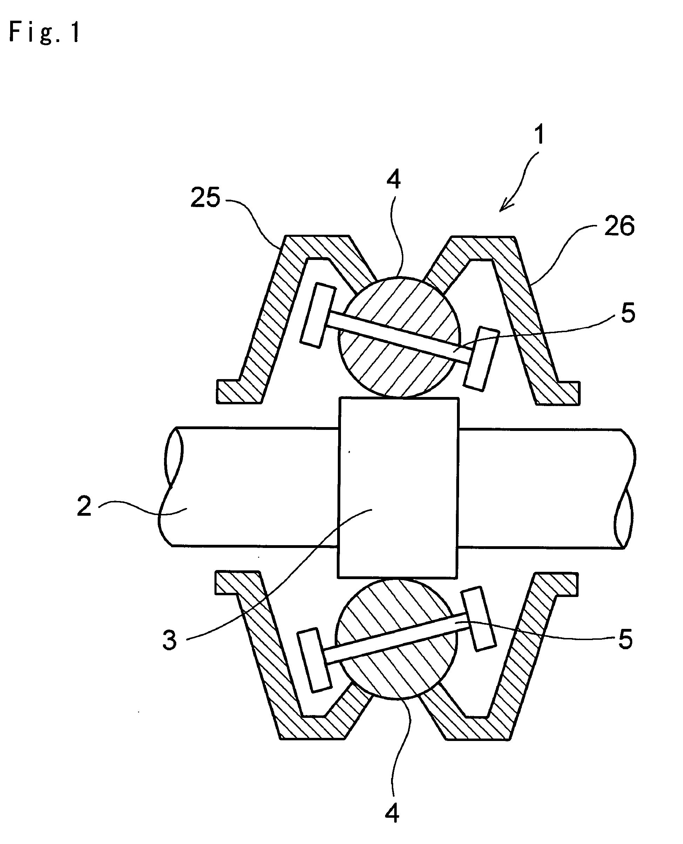

Next, this invention will be described in connection with its specific examples. As shown in Fig. 1, a continuously variable transmission mechanism 1 is configured to transmit a torque among three rotary elements, and to continuously vary a speed change ratio between a first rotary element and a second rotary element and a speed change ratio between the first rotary element and a third rotary element. In Fig. 1, reference numeral 2 represents an input shaft, and a roller 3 is fitted onto the input shaft 2 to be rotated integrally with the input shaft 2. Specifically, the roller 3 is a cylindrical member, and an outer circumferential face thereof serves as a torque transmission face. In addition, a plurality of rolling members 4 are arranged around the torque transmission face while being contacted therewith.

As explained later, the rolling member 4 is adapted to mediate a torque transmission, and to vary a speed change ratio. For this purpose, an outer circumferential face of the rolling member 4 is formed into a smooth curved face, therefore, the rolling member 4 is allowed to be rotated smoothly by a rotation of the roller 3 and the input shaft 2. Specifically, the rolling member 4 is a spherical member such as a steel ball, or an ellipsoidal member like a rugby ball whose sectional shape is oval. In the example to be explained hereinafter, a spherical member such as a steel ball is used to serve as the rolling member 4. Therefore, the rolling member will also be called as a ball 4 in the explanation.

The plurality of balls 4 are arranged around the outer circumferential face of the roller 3 at regular intervals, and contacted with the outer circumferential face of the roller 3 in a torque transmittable manner. A support shaft 5 penetrates each ball 4, and the ball 4 is held to rotate around the support shaft 5 as a rotational center axis. A mechanism for holding the ball 4 in a rotatable manner while inhibiting revolution of the ball 4 is not especially shown in the accompanying figures. However, for example, the ball 4 can be held in the above-explained condition by extending support portions from a casing of the continuously variable transmission mechanism 1 to near the ball 4 thereby holding end portions of the support shaft 5. In this case, it is possible to hold the support shaft 5 in a rotatable manner. Alternatively, it is also possible to hold the support shaft 5 in a manner not to allow the support shaft 5 to rotate but to allow the ball 4 to rotate around the support shaft 5.

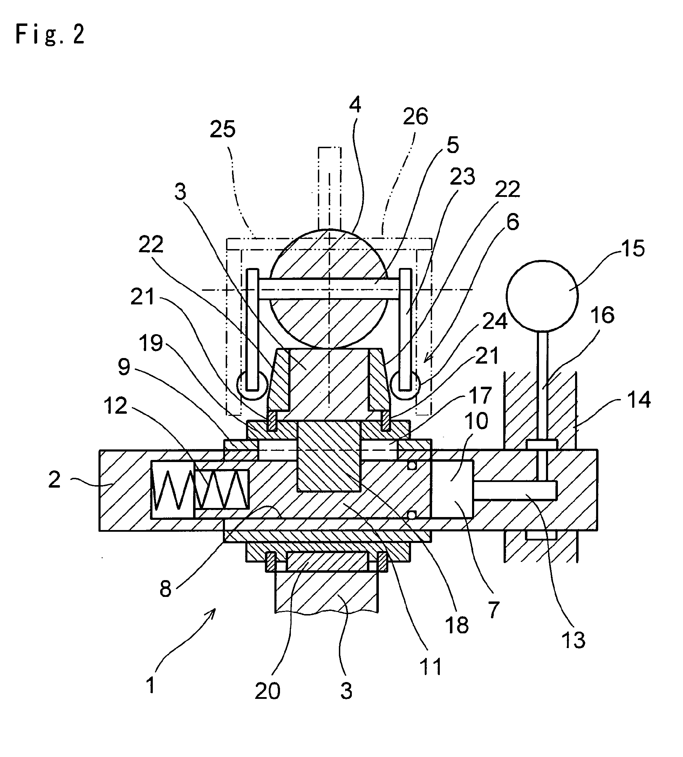

Thus, the support shaft 5 serves as the rotational center axis of the rolling member 4. As shown in Fig. 1, the support shaft 5 is held in a plane including a rotational center axis of the input shaft 2 and the roller 3, while being inclined with respect to the a rotational center axis of the input shaft 2 and the roller 3. In the example shown in Fig. 1, the support shaft 5 is allowed to be oscillated. One example of a tilt angle adjusting mechanism 6 for inclining the ball 4 and the support shaft 5 is shown in Fig. 2.

In the example shown in Fig. 2, a hollow portion 7 is formed inside of the input shaft 2, and a slide pin 9 having a through hole 8 is arranged on an axially intermediate portion of the input shaft 2. An inner diameter of the through hole 8 is identical to that of the hollow portion 7, and the hollow portion 7 and the through hole 8 are integrated to form a cylinder 10. In the cylinder 10, a piston 11 is housed in a manner to reciprocate in the axial direction while keeping a liquid-tight condition. In order to push the piston 11 in the axial direction, a return spring 12 is arranged in the cylinder 10 on one of end sides thereof, and the other end of the cylinder 10 is communicated with one of an end portion of an oil passage 13 formed in the input shaft 2 in the axial direction. The other end portion of the oil passage 13 opens toward a portion of an outer circumferential face of the input shaft 2 fitted with a casing 14. In the casing 14, an oil passage 16 is formed to be connected with a hydraulic pressure generating device 15, and the oil passages 13 and 16 are communicated with each other at a portion where the input shaft 2 is fitted with the casing 14. Here, the hydraulic pressure generating device 15 comprises a (not shown) control device adapted to control an operating oil to be fed to the oil passage 16 and discharged from the oil passage 16. That is, the hydraulic pressure generating device 15 is adapted to feed the hydraulic pressure to the cylinder 10 thereby moving the piston 11 toward the left side in Fig. 2, and to discharge the hydraulic pressure from the cylinder 10.

A slit 17 is formed to penetrate the aforementioned slide pin 9 within a predetermined length in the axial direction. Specifically, the length of the slit 17 is shorter than the piston 11. Therefore, the slit 17 is kept closed by the piston 11 even if the piston 11 is moved in the axial direction. The piston 11 is fitted with a pin 18 protruding toward an outer circumferential side of the slide pin 9 through the slit 17. Further, a cylindrical roller stator 19 is fitted onto an outer circumferential face of the slide pin 9. The roller stator 19 is allowed to be moved in the axial direction and to be rotated integrally with the slide pin 9. A leading end of the aforementioned pin 18 attached to the piston 11 is inserted into the roller stator 19. That is, the piston 11 is integrated with the roller stator 19 through the pin 18.

The aforementioned roller 3 is fitted onto an outer circumferential face of the roller stator 19 to be reciprocated in the axial direction together with the piston 11. Specifically, the roller 3 is integrated with the roller stator 19 by a key 20 in a rotational direction, and integrated with the roller stator 19 by a snap ring 21 in the axial direction. In order to maintain a contact between the roller 3 and the ball 4 even if the roller 3 is moved in the axial direction, the roller 3 has a predetermined length in the axial direction. In addition, a thrust idler 22 whose outer face is tapered is attached to each axial end of the roller 3. Meanwhile, a ball stator 23 is attached to each end portion of the support shaft 5. The ball stator 23 extends to near the outer face of the thrust idler 22, and a guide roller 24 is attached to a leading end of the ball stator 23 in a manner to be contacted with the outer face of the thrust idler 22. The support shaft 5 and the ball 4 supported by the support shaft 5 are held in a manner not to move in the axial direction of the input shaft 2, but the support shaft 5 is allowed to tilt. Specifically, according to the tilt angle adjusting mechanism 6 shown in Fig. 2, the guide roller 24 is moved vertically along the surface of the thrust idler 22 when the roller 3 fitted with the thrust idlers 22 is moved in the axial direction. As a result, the support shaft 5 penetrating the ball 4 is inclined.

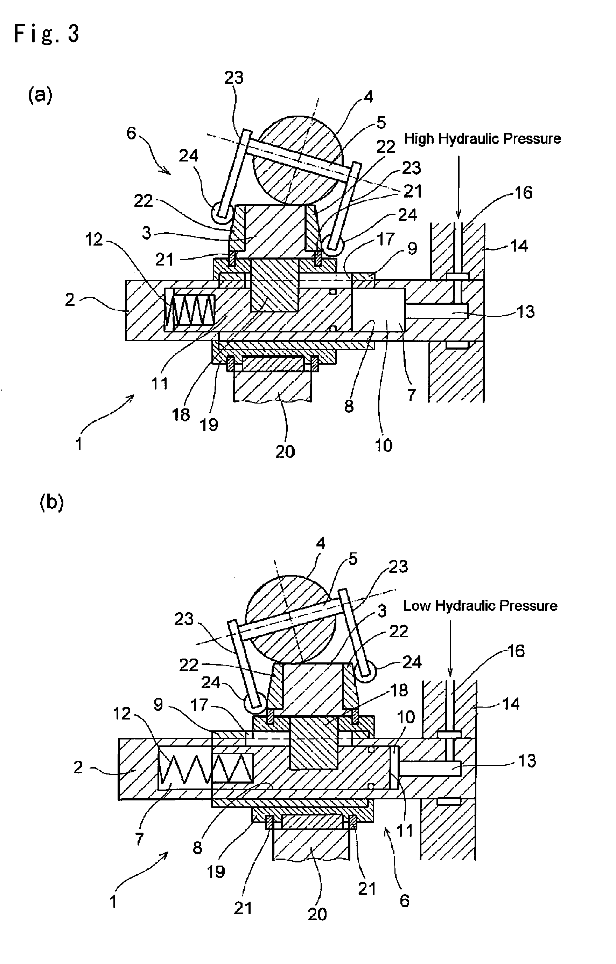

Operating state of the tilt angle adjusting mechanism 6 is shown in Figs. 3 (a) and 3 (b) in more detail. Specifically, when the operating oil is fed to the cylinder 10 from the hydraulic pressure generating device 15, the hydraulic pressure of the operating oil exceeds an elastic force of the return spring 12. As a result, the piston 11 is moved to the left side while compressing the return spring 12 as shown in Fig. 3 (a). As described, the piston 11 is connected with the roller stator 19 through the pin 18. Therefore, in this situation, the roller 3 is moved to the left side in Fig. 3 (a) together with the thrust idlers 22 attached to both sides of the roller 3. Consequently, the guide rollers 24 contacted individually with the inclined faces of the thrust idlers 22 roll along the inclined faces of the thrust idlers 22, and the support shaft 5 connected with the guide rollers 24 through the ball stators 23 is thereby inclined toward the right side in Fig. 3 (a).

To the contrary, when the operating oil is discharged from the cylinder 10, the hydraulic pressure in the cylinder 10 is reduced below the elastic force of the return spring 12. As a result, the piston 11 is pushed to the right side by the return spring 12 as shown in Fig. 3 (b). In this situation, since the piston 11 is connected with the roller stator 19 through the pin 18, the roller 3 is moved to the right side in Fig. 3 (b) together with the thrust idlers 22 attached to both sides of the roller 3. Consequently, the guide rollers 24 contacted individually with the inclined faces of the thrust idlers 22 roll along the inclined faces of the thrust idlers 22, and the support shaft 5 connected with the guide rollers 24 through the ball stators 23 is thereby inclined toward the left side in Fig. 3 (b).

Thus, a position of the piston 11, that is, a tilt angle of the support shaft 5 penetrating the ball 4 can be adjusted by controlling an amount of the operating oil in the cylinder 10. Further, the tilt angle of the support shaft 5 can be controlled by a feedback control. For this purpose, a target speed change ratio is calculated, and the feedback control is carried out on the basis of a deviation between the calculated target speed change ratio and an actual speed change ratio.

A purpose of thus tilting the support shaft 5 penetrating the ball 4 is to vary the speed change ratio. For this purpose, a pair of output members to which the torque is transmitted through the ball 4 is arranged while being contacted with the outer face of the ball 4. In the example shown in Fig. 1, a first output disc 25 and a second output disc 26 are provided to serve as the output members. Those discs 25 and 26 are thin plate-like or bawl-like rotary members configured to rotate around the center axis of the input shaft 2, and inner circumferential opening edges of discs 25 and 26 are contacted with the outer face of the ball 4 in a torque transmittable manner. Here, the ball 4 can be contacted not only directly with the discs 25 and 26 as well as the roller 3 but also contacted indirectly with those members through an oil film of traction oil.

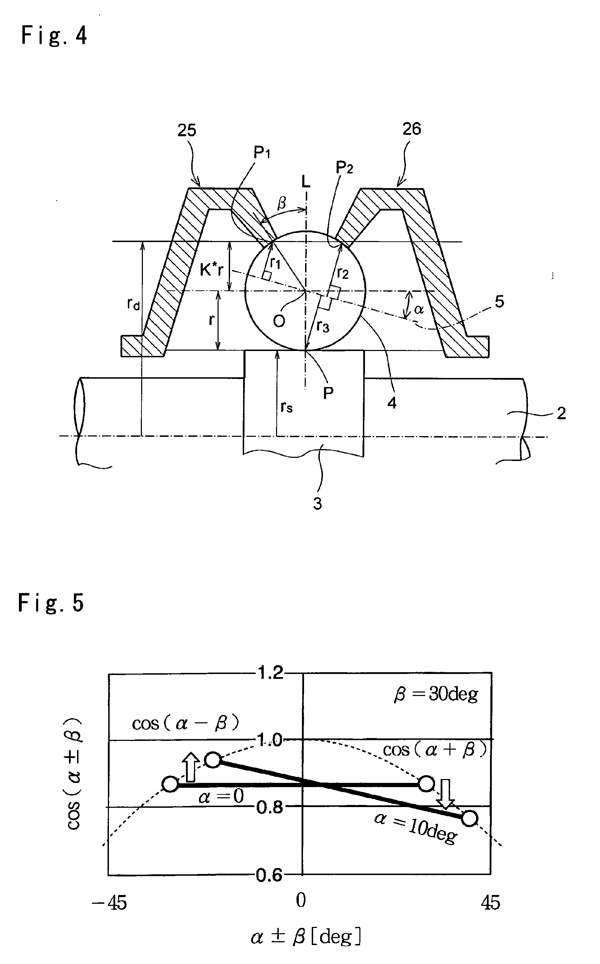

Preferably, both of the first output disc 25 and the second output disc 26 are formed into a same configuration or symmetric configurations. As shown in Fig. 1, those discs 25 and 26 are arranged on symmetric positions across the ball 4. That is, the discs 25 and 26 are contacted with symmetric sites of the outer surface of the ball 4. The mechanism is to be explained in more detail with reference to Fig. 4. As shown in Fig. 4, opening ends of the discs 25 and 26 are contacted with symmetric portions of the ball 4 across a line L passing through a center O of the ball 4 and a contact point P at which the ball 4 is contacted with the roller 3. A circumferential velocity at P1 is proportional to a distance r1 between the contact point P1 and the center of the support shaft 5, and a circumferential velocity at P2 is proportional to a distance r2 between the contact point P2 and the center of the support shaft 5. Therefore, in case the ball 4 is not tilted so that the support shaft 5 is kept parallel to the input shaft 2, the circumferential velocities at the contact points P1 and P2, that is, rotational speeds of the discs 25 and 26 are equalized. However, in case the ball 4 is tilted so that the support shaft 5 is inclined with respect to the input shaft 2, the rotational speed of any one of the discs 25 and 26 is increased relatively, and the rotational speed of the other disc 25 or 26 is lowered relatively In addition, it is also possible to configure the continuously variable transmission mechanism to equalize the rotational speeds of the discs 25 and 26 while inclining the support shaft 5. In this case, the contact point between the ball 4 and the disc 25, and the contact point between the ball 4 and the disc 26 are adjusted to be deviated slightly from the aforementioned symmetrical portions across the line L.

The torque is frictionally transmitted between the ball 4 and the disc 25, and between the ball 4 and the disc 26 directly or indirectly through a traction oil. That is, a torque proportional to a contact pressure between the ball 4 and the disc 25 (or 26) can be transmitted therebetween. Therefore, the discs 25 and 26 are individually pushed to be contacted with the ball 4 by a predetermined pressure to achieve a desired transmission torque capacity. For this purpose, although not shown in the accompanying figures, an elastic mechanism such as a disc spring or a hydraulic mechanism is used as a pushing mechanism for pushing the discs 25 and 26 in the axial direction.

Next, an action of the continuously variable transmission mechanism 1 will be explained hereinafter. When a torque is inputted to the input shaft 2 so that the roller 3 is rotated together with the input shaft 2, the torque is transmitted to the ball 4 being contacted with the outer face of the roller 3 and the ball 4 is thereby rotated. In this situation, the ball 4 is rotated around the rotational center of the support shaft 5 in a direction opposite to a rotational direction of the roller 3. As described, the first output disc 25 and the second output disc 26 are contacted with the outer face of the ball 4 in a torque transmittable manner. Therefore, the torque is then transmitted to the discs 25 and 26. As a result, the discs 25 and 26 are rotated in the same direction as the rotational direction of the ball 4, that is, in the direction opposite to the rotational direction of the input shaft 2. Thus, the ball 4 serves as an idler to transmit the torque from the input shaft 2 to the discs 25 and 26 through the ball 4. In this situation, a number of rotations (i.e., a rotational speed) of the ball 4 according to that of the roller 3, and a number of rotations of each disc 25 and 26 according to that of the roller 3 are governed by a rotation radius of the contact point between the ball 4 and each element (that is, by a distance between the support shaft 5 as the rotational center axis of the ball 4 and each element). Specifically, the rotation radius of the contact point between the ball 4 and above-mentioned each element is varied according to a tilt angle α of the ball 4 (or the shaft 5) as explained hereinafter. That is, a speed change ratio, in other words, a ratio between the rotational speed of the first output disc 25 with respect to that of the input shaft 2 and the rotational speed of the second output disc 26 with respect to that of the input shaft 2 can be varied by varying the tilt angle α of the ball 4.

A principle of such a speed change will be explained in more detail with reference to Fig. 4. In case the discs 25 and 26 are contacted with symmetric positions of the outer face of the ball 4 across the line L, a distance between the contact point P1 or P2 and the center axis of the support shaft 5 which is not inclined (i.e., a rotation radius) is shorter than a radius r of the ball 4. In Fig. 4, k represents a ratio between: the distance between the contact point P1 or P2 and the center axis of the not inclined support shaft 5; and the radius r of the ball 4. That is, k represents a coefficient of contact point. Accordingly, an angle β between the contact point P1 or P2 and the line L can be obtained by:

$$\beta = \cos^{-1}k.$$

Here, the distance between the contact point P1 or P2 and the center axis of the not inclined support shaft 5 can be obtained by (k · r). Further, a radius rd of the contact point P1 of the disc 25 or the contact point P2 of the disc 26 (that is, a radius between P1 or P2 and the center axis of the input shaft 2: rotation radius) can be obtained by the following formula:

$$rd = rs + r(1+k)$$

where rs represents a radius of the roller 3.

In case the ball 4 tilts at an angle of α (that is, in case the tilt angle of the support shaft 5 with respect to the input shaft 2 is α), a rotation radius r1 of the contact point P1 between the first output disc 25 and the ball4, a rotation radius r2 of the contact point P2 between the second output disc 26 and the ball 4, and a rotation radius r3 of a contact point P between the ball 4 and the roller 3 can be expressed individually by the following expressions:

$$r1 = r \cdot \sin[\pi/2 - (\alpha + \beta)] = r \cdot \cos(\alpha + \beta);$$

$$r2 = r \cdot \sin[\pi/2 + (\alpha - \beta)] = r \cdot \cos(\alpha - \beta);$$

and

$$r3 = r \cdot \cos \alpha.$$

Here, a definition of the rotation radius is a distance between the center axis of the support shaft 5 (i.e., the rotational center axis of the ball 4) and each contact point.

Accordingly, in case the input shaft 2 (or the roller 3) is rotated at a speed nr, a rotational speed n1 of the first output disc 25, and a rotational speed n2 of the second output disc 26 can be obtained individually by the following formula:

$$n1 = nr \cdot rs / r3 \cdot r1 / rd;$$

and

$$n2 = nr \cdot rs / r3 \cdot r2 / rd.$$

Further, a ratio between the rotational speeds n1 and n2 can be expressed as:

$$n2 / n1 = \cos ( \alpha - \beta ) / \cos ( \alpha + \beta ).$$

In case the tilt angle $\alpha$ of the ball 4 is varied under the condition in which the aforementioned angle $\beta$ is kept to a constant degree (e.g., at a 30 degree), values of cos ($\alpha$ - $\beta$) and cos ($\alpha$ + $\beta$) are varied as shown in Fig. 5. Specifically, when the tilt angle $\alpha$ is varied in a positive or negative direction, one of the values of cos ($\alpha$ - $\beta$) and cos ($\alpha$ + $\beta$) is increased and the other value is decreased. That is, the rotational speeds are increased and decreased simultaneously and continuously.

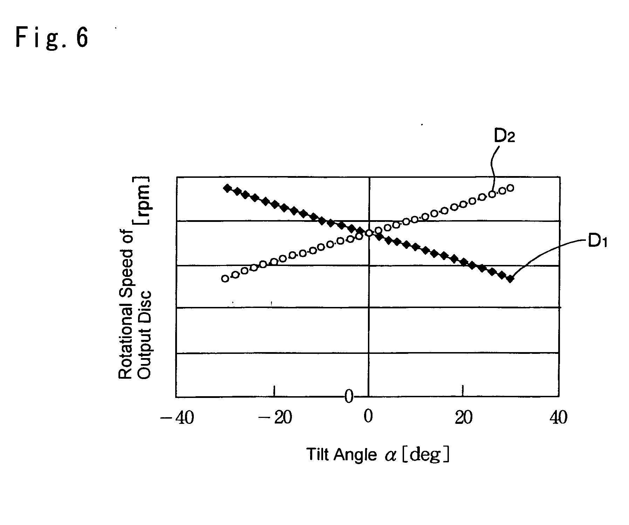

Changes in the rotational speeds of the discs 25 and 26 resulting from a change in the tilt angle $\alpha$ are shown in Fig. 6. In Fig. 6, D1 represents a rotational speed of the first output disc 25, and D2 represents a rotational speed of the second output disc 26. As can be seen from Fig. 6, in case the tilt angle $\alpha$ is increased in the positive direction (that is, in case the support shaft 5 is inclined toward the right side in Fig. 4), the rotational speed D1 of the first output disc 25 is lowered and the rotational speed D2 of the second output disc 26 is increased with the increase in the tilt angle $\alpha$. To the contrary, in case the tilt angle $\alpha$ is increased in the negative direction (that is, in case the support shaft 5 is inclined toward the left side in Fig. 4), the rotational speed D1 of the first output disc 25 is increased and the rotational speed D2 of the second output disc 26 is lowered with the increase in the tilt angle $\alpha$ in the negative direction.

Thus, according to the continuously variable transmission mechanism 1 of the present invention, the torque can be transmitted among three rotary members, that is, among the input shaft 2 and the output discs 25 and 26. Moreover, the speed change ratio between the input shaft 2 and one of the output discs 25 and 26, and the speed change ratio between the input shaft 2 and the other output disc 25 or 26, can be varied simultaneously In addition, a speed change for increasing the speed and a speed change for reducing the speed can be carried out simultaneously Therefore, the continuously variable transmission mechanism 1 can be used as a speed reducing mechanism for reducing the rotational speeds of the discs 25 and 26 lower than the rotational speed of the input shaft 2.

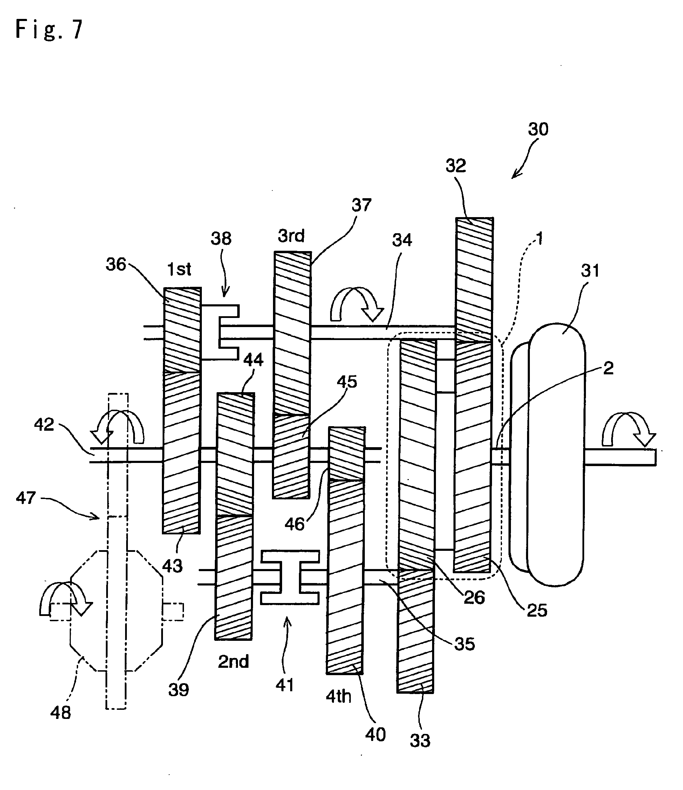

Next, here will be explained a transmission 30 using the continuously variable transmission mechanism 1 thus has been explained. An example of the transmission 30 configured to set four forward stages is shown in Fig. 7. The input shaft 2 is connected with a (not shown) prime mover thorough an input transmission mechanism 31. Specifically, a starting clutch, a torque converter or the like is used as the input transmission mechanism 31, and a role of the input transmission mechanism 31 is to keep the prime mover rotating even when a vehicle having the transmission 30 is stopping. In the example shown in Fig. 7, a counter drive gear having teeth on its outer circumferential face is used as the aforementioned first and second output discs 25 and 26. The first output disc 25 meshes with a first counter driven gear 32, and the second output disc 26 meshes with a second counter driven gear 33. The first counter driven gear 32 is fitted onto a first intermediate shaft 34, and the second counter driven gear 33 is fitted onto a second intermediate shaft 35. Thus, the intermediate shafts 34 and 35 are arranged parallel to each other, and also parallel to the input shaft 2.

In addition, a first drive gear 36 and a third drive gear 37 are fitted onto the first intermediate shaft 34 in a rotatable manner, and a first dog clutch 38 is arranged therebetween. Here, the first dog clutch 38 corresponds to the first switching mechanism of the present invention. Specifically, the first dog clutch 38 is adapted to connect the first drive gear 36 and the third drive gear 37 selectively with the first intermediate shaft 34, and for this purpose, the first dog clutch 38 is provided with a dog adapted to mesh with the drive gears 36 and 37 selectively, and splined to the first intermediate shaft 34. Here, the dog corresponds to the engagement member of the present invention. The dog of the first dog clutch 38 may be moved in the axial direction of the first intermediate shaft 34 not only by a mechanism to be operated manually but also by a mechanism to be controlled electrically and actuated hydraulically or electromagnetically. In addition, a synchronizer, a multi plate disc clutch or the like may also used as the first switching mechanism instead of the dog clutch 38.

Meanwhile, a second drive gear 39 and a fourth drive gear 40 are fitted onto the second intermediate shaft 35 in a rotatable manner, and a second dog clutch 41 is arranged therebetween. Here, the second dog clutch 41 corresponds to the second switching mechanism of the present invention. Specifically, the second dog clutch 41 is adapted to connect the second drive gear 39 and the fourth drive gear 40 selectively with the second intermediate shaft 35, and for this purpose, the second dog clutch 41 is provided with a dog adapted to mesh with the drive gears 39 and 40 selectively, and splined to the second intermediate shaft 35. The dog of the second dog clutch 41 may also be moved in the axial direction of the second intermediate shaft 35 not only by a mechanism to be operated manually but also by a mechanism to be controlled electrically and actuated hydraulically or electromagnetically. In addition, a synchronizer, a multi plate disc clutch or the like may also used as the second switching mechanism instead of the dog clutch 41.

An output shaft 42 is arranged parallel to the first intermediate shaft 34 and the second intermediate shaft 35 in a rotatable manner, and a first driven gear 43, a second driven gear 44, a third driven gear 45 and a fourth driven gear 46 are fitted onto the output shaft 42. The first driven gear 43 meshes with the first drive gear 36, the second driven gear 44 meshes with the second drive gear 39, the third driven gear 45 meshes with the third drive gear 37, and the fourth driven gear 46 meshes with the fourth drive gear 40. In addition, the output shaft 42 is connected with a differential 48 through a gear pair 47 for example.

A gear ratio (that is, a ratio between a teeth number of the drive gear and a teeth number of the driven gear) of the first gear pair is the largest ratio in the first to fourth gear pairs. The gear ratios of the second to fourth gear pairs are reduced in sequence, and accordingly, the gear ratio of the fourth gear pair is the smallest ratio.

Specifically, the switching mechanism of the present invention is adapted to transmit the torque selectively to the output shaft 42. For this purpose, the switching mechanism may also be configured to connect the driven gears selectively with the output shaft 42, instead of connecting the drive gears with the intermediate shafts selectively

The transmission 30 shown in Fig. 7 can be configured to be an automatic transmission capable of shifting the dog clutches 38 and 41 electrically. In this case, the transmission 30 is to be provided with an electronic control unit (not shown). The electronic control unit is adapted to determine a gear stage to be achieved on the basis of data on a speed of the vehicle having the transmission 30, an opening degree of an accelerator, a speed change diagram stored in advance and so on, and to achieve the determined gear stage by actuating the dog clutches 38 and 41.

Hereinafter, gear stages to be set automatically, or gear stages to be set by operating the dog clutches 38 and 41 manually will be explained in more detail. First of all, the first stage is set by shifting the dog clutch 38 to the left side in Fig. 7 thereby connecting the first drive gear 36 with the first intermediate shaft 34. That is, the first gear pair is allowed to transmit the torque between the first intermediate shaft 34 and the output shaft 42. In this situation, when the torque is inputted to the input shaft 2 of the continuously variable transmission mechanism 1, the input shaft 2 is rotated together with the roller 3. As a result, the torque is transmitted to the first output disc 25 and to the second output disc 26 thorough the ball 4, and those output discs 25 and 26 are thereby rotated in the direction opposite to the rotational direction of the input shaft 2. As described, the rotational speeds of the output discs 25 and 26 are governed by the tilt angle $\alpha$ of the ball 4 and the rotational speed of the input shaft 2 (i.e., an input speed).

In this situation, since the output disc 25 meshes with the counter driven gear 32 and the output disc 26 meshes with the counter driven gear 33, the torque is transmitted to the first intermediate shaft 34 and to the second intermediate shaft 35. However, in this situation, the second dog clutch 41 arranged on the second intermediated shaft 35 is positioned on a neutral position, and the second intermediate shaft 35 is not connected with any of the second drive gear 39 and the fourth drive gear 40. Therefore, the torque will not be transmitted from the second intermediate shaft 35 to the output shaft 42. Meanwhile, the first intermediate shaft 34 is connected with the first drive gear 36 by the first dog clutch 38 arranged on the first intermediate shaft 34. Therefore, the torque is transmitted from the first intermediate shaft 34 to the output shaft 42 through the first gear pair. As a result, the torque is transmitted from the input shaft 2 to the output shaft 42 through the first output disc 25, the first intermediate shaft 34, and the first gear pair Accordingly, the speed change ratio under the first stage is determined by: the speed change ratio between the roller 3 and the first output disc 25 depending on the tilt angle $\alpha$ of the ball 4; and the gear ratio of the first gear pair.

The second gear stage is achieved by the following procedure. First of all, the tilt angle $\alpha$ of the ball 4 is increased under the first stage in a direction to increase the rotational speeds of the first output disc 25 and the first intermediate shaft 34. As a result, the rotational speed of the second output disc 26 integral with the second intermediate shaft 35 is lowered gradually In this situation, since the rotational speed of the first intermediate shaft 34 is thus increased, the rotational speed of the output shaft 42 to which the torque is being transmitted from the first intermediate shaft 34 is also increased gradually As a result, the rotational speeds of the second gear pair and the fourth gear pair are increased gradually Therefore, during the process of increasing the tilt angle $\alpha$ of the ball 4 of the continuously variable transmission mechanism 1 under the condition where the torque is being transmitted to the output shaft 42 through the first gear pair (that is, under the first stage), the rotational speed of the second gear pair becomes congruent with the rotational speed of the second intermediate shaft 35 at a predetermined tilt angle $\alpha$. That is, the rotational speed of the second driven gear 39 is synchronized with the rotational speed of the second intermediate shaft 35.

In this synchronized state, the first dog clutch 38 is shifted to a neutral position thereby disconnecting the first drive gear 36 from the first intermediate shaft 34, and the second dog clutch 41 is shifted to the left side in Fig. 7 thereby connecting the second drive gear 39 with the second intermediate shaft 35. As a result, the second gear pair is allowed to transmit the torque between the second intermediate shaft 35 and the output shaft 42 (that is, the second stage is achieved). In this situation, when the torque is inputted to the input shaft 2 of the continuously variable transmission mechanism 1, the roller 3 is rotated together with the input shaft 2. As a result, the torque is transmitted to the first output disc 25 and to the second output disc 26 thorough the ball 4, and those output discs 25 and 26 are thereby rotated in the direction opposite to the rotational direction of the input shaft 2. In this case, the rotational speeds of the output discs 25 and 26 are also governed by the tilt angle $\alpha$ of the ball 4 and the rotational speed of the input shaft 2 (i.e., the input speed).

In this situation, since the output disc 25 meshes with the counter driven gear 32 and the output disc 26 meshes with the counter driven gear 33, the torque is transmitted to the first intermediate shaft 34 and to the second intermediate shaft 35. However, in this situation, the first dog clutch 38 arranged on the first intermediated shaft 34 is positioned on the neutral position, and the first intermediate shaft 34 is not connected with any of the first drive gear 36 and the third drive gear 37. Therefore, the torque will not be transmitted from the first intermediate shaft 34 to the output shaft 42. Meanwhile, the second intermediate shaft 35 is connected with the second drive gear 39 by the second dog clutch 41 arranged on the second intermediate shaft 35. Therefore, the torque is transmitted from the second intermediate shaft 35 to the output shaft 42 through the second gear pair. As a result, the torque is transmitted from the input shaft 2 to the output shaft 42 through the second output disc 26, the second intermediate shaft 35, and the second gear pair. Accordingly, the speed change ratio under the second stage is determined by: the speed change ratio between the roller 3 and the second output disc 26 depending on the tilt angle $\alpha$ of the ball 4; and the gear ratio of the second gear pair.

As a result of thus shifting the gear stage from the first stage to the second stage while synchronizing the rotational speeds as explained above, the gear stage can be shifted smoothly without varying the rotational speeds abruptly and without causing shocks. The speed change operation thus has been explained are carried out by the aforementioned electronic control unit corresponding to the control means of the present invention.

The third stage is achieved by connecting the third drive gear 37 with the first intermediate shaft 34 by the first dog clutch 38, while disconnecting the second drive gear 39 from the second intermediate shaft 35 by shifting the second dog clutch 41 to the neutral position. Preferably, the dog clutches 38 and 41 are shifted while synchronizing the rotational speeds of the gear and the shaft involved in the shifting operation, as in the case of shifting the gear stage from the first stage to the second stage.

In order to achieve the third gear stage, the third drive gear 37 is connected with the first intermediate shaft 34 by shifting the first dog clutch 38 to the right side in Fig. 7. As a result, the third gear pair is allowed to transmit the torque between the first intermediate shaft 34 and the output shaft 42. In this situation, when the torque is inputted to the input shaft 2 of the continuously variable transmission mechanism 1, the roller 3 is rotated together with the input shaft 2. As a result, the torque is transmitted to the first output disc 25 and to the second output disc 26 thorough the ball 4, and those output discs 25 and 26 are thereby rotated in the direction opposite to the rotational direction of the input shaft 2. As in the previous case, the rotational speeds of the output discs 25 and 26 are also governed by the tilt angle $\alpha$ of the ball 4 and the rotational speed of the input shaft 2 (i.e., the input speed).

In this situation, since the output disc 25 meshes with the counter driven gear 32 and the output disc 26 meshes with the counter driven gear 33, the torque is transmitted to the first intermediate shaft 34 and to the second intermediate shaft 35. However, in this situation, the second dog clutch 41 arranged on the second intermediated shaft 35 is positioned on the neutral position, and the second intermediate shaft 35 is not connected with any of the second drive gear 39 and the fourth drive gear 40. Therefore, the torque will not be transmitted from the second intermediate shaft 35 to the output shaft 42. Meanwhile, the first intermediate shaft 34 is connected with the third drive gear 37 by the first dog clutch 38 arranged on the first intermediate shaft 34. Therefore, the torque is transmitted from the first intermediate shaft 34 to the output shaft 42 through the third gear pair. As a result, the torque is transmitted from the input shaft 2 to the output shaft 42 through the first output disc 25, the first intermediate shaft 34, and the third gear pair. Accordingly, the speed change ratio under the third stage is determined by: the speed change ratio between the roller 3 and the first output disc 25 depending on the tilt angle $\alpha$ of the ball 4; and the gear ratio of the third gear pair.

The fourth gear stage is achieved by the following procedure. As in the case of the first stage, the tilt angle $\alpha$ of the ball 4 is increased under the third stage in a direction to increase the rotational speeds of the first output disc 25 and the first intermediate shaft 34. As a result, the rotational speed of the second output disc 26 integral with the second intermediate shaft 35 is lowered gradually. In this situation, since the rotational speed of the first intermediate shaft 34 is thus increased, the rotational speed of the output shaft 42 to which the torque is being transmitted from the first intermediate shaft 34 is also increased gradually. As a result, the rotational speeds of the second gear pair and the fourth gear pair are increased gradually. Therefore, during the process of increasing the tilt angle $\alpha$ of the ball 4 of the continuously variable transmission mechanism 1 under the condition where the torque is being transmitted to the output shaft 42 through the third gear pair (that is, under the third stage), the rotational speed of the fourth gear pair becomes congruent with the rotational speed of the second intermediate shaft 35 at a predetermined tilt angle $\alpha$. That is, the rotational speed of the fourth driven gear 40 is synchronized with the rotational speed of the second intermediate shaft 35.

In this synchronized state, the first dog clutch 38 is shifted to a neutral position thereby disconnecting the third drive gear 37 from the first intermediate shaft 34, and the second dog clutch 41 is shifted to the right side in Fig. 7 thereby connecting the fourth drive gear 40 with the second intermediate shaft 35. As a result, the fourth gear pair is allowed to transmit the torque between the second intermediate shaft 35 and the output shaft 42 (that is, the fourth stage is achieved). In this situation, when the torque is inputted to the input shaft 2 of the continuously variable transmission mechanism 1, the roller 3 is rotated together with the input shaft 2. As a result, the torque is transmitted to the first output disc 25 and to the second output disc 26 thorough the ball 4, and those output discs 25 and 26 are thereby rotated in the direction opposite to the rotational direction of the input shaft 2. As in the previous cases, the rotational speeds of the output discs 25 and 26 are also governed by the tilt angle $\alpha$ of the ball 4 and the rotational speed of the input shaft 2 (i.e., the input speed).

In this situation, since the output disc 25 meshes with the counter driven gear 32 and the output disc 26 meshes with the counter driven gear 33, the torque is transmitted to the first intermediate shaft 34 and to the second intermediate shaft 35. However, in this situation, the first dog clutch 38 arranged on the first intermediated shaft 34 is positioned on the neutral position, and the first intermediate shaft 34 is not connected with any of the first drive gear 36 and the third drive gear 37. Therefore, the torque will not be transmitted from the first intermediate shaft 34 to the output shaft 42. Meanwhile, the second intermediate shaft 35 is connected with the fourth drive gear 40 by the second dog clutch 41 arranged on the second intermediate shaft 35. Therefore, the torque is transmitted from the second intermediate shaft 35 to the output shaft 42 through the fourth gear pair. As a result, the torque is transmitted from the input shaft 2 to the output shaft 42 through the second output disc 26, the second intermediate shaft 35, and the fourth gear pair. Accordingly, the speed change ratio under the fourth stage is determined by: the speed change ratio between the roller 3 and the second output disc 26 depending on the tilt angle $\alpha$ of the ball 4; and the gear ratio of the fourth gear pair.

As a result of thus shifting the gear stage from the third stage to the fourth stage while synchronizing the rotational speeds as explained above, the gear stage can be shifted smoothly without varying the rotational speeds abruptly and without causing shocks. The speed change operation thus has been explained are carried out by the aforementioned electronic control unit corresponding to the control means of the present invention.

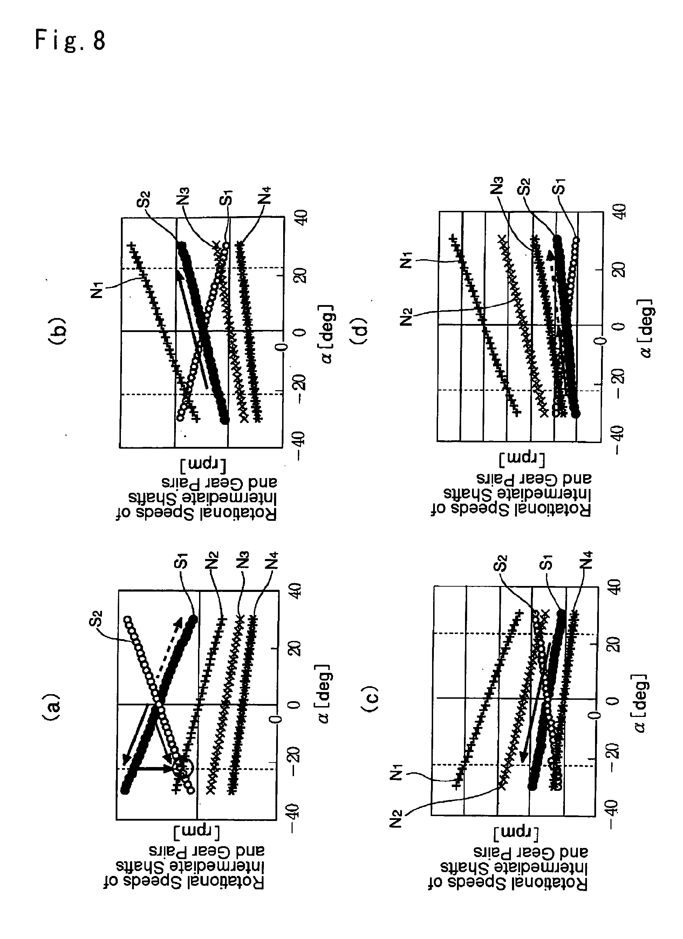

Here will be explained operating states and synchronous shifting operations under the aforementioned first to fourth stage in more detail with reference to diagrams shown in Fig. 8. In Figs. 8(a) to 8(d), each horizontal axis represents a tilt angle $\alpha$ of the ball 4 , and each vertical axis represents a rotational speeds of the intermediate shafts 34 and 35 and the gear pairs for setting the gear stages (i.e., the gears to be connected with the intermediate shaft selectively by the switching mechanism). That is, changes in the rotational speeds of the rotary elements are indicated in Fig 8. Here, the definition of the term "rotational speed" is a relative rotational speed of the rotary element with respect to the rotational speed of the input shaft 2.

Fig. 8 (a) shows a status under the first stage. As shown in Fig. 8 (a), in case the tilt angle $\alpha$ is increased in the negative direction (i.e., in case the support shaft 5 is inclined toward the left side in Figs. 2 and 3), a rotational speed S1 of the first intermediate shaft 34 is increased gradually, and a rotational speed S2 of the second intermediate shaft 35 is reduced gradually That is, the speed change ratio of the first stage is decreased gradually thereby upshifting continuously As described, the rotational speed S2 of the second intermediate shaft 35 which is not transmitting the torque to the output shaft 42 is lowered gradually in this situation.

As a result of the above-explained continuous upshifting, a rotational speed of the output shaft 42 (i.e., a relative rotational speed with respect to the rotational speed of the input shaft 2) is increased so that a rotational speed N2 of the second gear pair, a rotational speed N3 of the third gear pair and a rotational speed N4 of the fourth gear pair are increased gradually Thus, in this situation, the rotational speed N2 of the second gear pair is increased but the rotational speed S2 of the second intermediate shaft 35 is lowered gradually as a result of the continuous upshifting. Therefore, the rotational speeds N2 and S2 are synchronized with each other at a predetermined tilt angle $\alpha$. In this situation, since the second intermediate shaft 35 and the second drive gear 39 are thus rotated at the same speed, the second intermediate shaft 35 can be connected with the second drive gear 39 by engaging the dog of the second dog clutch 41 with the second drive gear 39. As a result, the gear stage is shifted to the second stage without changing the rotational speeds abruptly and without causing shocks. Additionally, in connection with the upshifting to the second stage, the first drive gear 36 is disengaged from the first intermediate shaft 34 by shifting the dog of the first dog clutch 38 to the neutral position.

A status under the second stage thus achieved is shown in Fig. 8 (b), and the tilt angle $\alpha$ is negative (that is, the support shaft 5 is inclined toward the left side in Fig. 4) in this situation. Under the second stage, the rotational speed S2 of the second intermediate shaft 35 is increased gradually by reducing the tilt angle $\alpha$ gradually and eventually tilting the ball 4 toward the positive direction (that is, inclining the support shaft 5 toward the right side in Fig. 4). As a result, a continuous upshifting is achieved.

In consequence of thus changing the tilt angle $\alpha$, the rotational speed S1 of the first intermediate shaft 34 is lowered gradually In addition, as a result of thus carrying out an upshifting, a rotational speed of the output shaft 42 is increased so that the rotational speed N3 of the third gear pair is increased gradually Therefore, the rotational speed S1 of the first intermediate shaft 34 is synchronized with the rotational speed N3 of the third gear pair at a predetermined tilt angle $\alpha$. In this situation, since the first intermediate shaft 34 and the third drive gear 37 are thus rotated at the same speed, the first intermediate shaft 34 can be connected with the third drive gear 37 by engaging the dog of the first dog clutch 38 with the third drive gear 37. As a result, the gear stage is shifted to the third stage without changing the rotational speeds abruptly and without causing shocks. Additionally, in connection with the upshifting to the third stage, the second drive gear 39 is disengaged from the second intermediate shaft 35 by shifting the dog of the second dog clutch 41 to the neutral position.

A status under the third stage thus achieved is shown in Fig. 8 (c), and the tilt angle $\alpha$ is positive (that is, the support shaft 5 is inclined toward the right side as shown in Fig. 4) in this situation. Under the third stage, the rotational speed S1 of the first intermediate shaft 34 is increased gradually by reducing the tilt angle $\alpha$ gradually and eventually tilting the ball 4 toward the negative direction (that is, inclining the support shaft 5 toward the left side in Fig. 4). As a result, a continuous upshifting is achieved.

In consequence of thus changing the tilt angle $\alpha$, the rotational speed S2 of the second intermediate shaft 35 is lowered gradually In addition, as a result of thus carrying out an upshifting, a rotational speed of the output shaft 42 is increased so that the rotational speed N4 of the fourth gear pair is increased gradually Therefore, the rotational speed S2 of the second intermediate shaft 35 is synchronized with the rotational speed N4 of the fourth gear pair at a predetermined tilt angle $\alpha$. In this synchronized situation, since the second intermediate shaft 35 and the fourth drive gear 40 are thus rotated at the same speed, the second intermediate shaft 35 can be connected with the fourth drive gear 40 by engaging the dog of the second dog clutch 41 with the fourth drive gear 40. As a result, the gear stage is shifted to the fourth stage without changing the rotational speeds abruptly and without causing shocks. Additionally, in connection with the upshifting to the fourth stage, the third drive gear 37 is disengaged from the first intermediate shaft 34 by shifting the dog of the first dog clutch 38 to the neutral position.

A status under the fourth stage thus achieved is shown in Fig. 8 (d), and the tilt angle $\alpha$ is negative (that is, the support shaft 5 is inclined toward the left side as shown in Fig. 4) in this situation. Under the fourth stage, the rotational speed S2 of the second intermediate shaft 35 is increased gradually by reducing the tilt angle $\alpha$ gradually and eventually tilting the ball 4 toward the positive direction (that is, inclining the support shaft 5 toward the right side in Fig. 4). As a result, a continuous upshifting is achieved.

In addition, the speed change operation from the first to the fourth stage can be carried out substantially continuously by completing the engagement of one of the dog clutches 38 and 41 quickly while completing the disengagement of the other dog clutch 38 or 41 quickly. In the example shown in Fig. 8, the rotational speeds of the rotary members are synchronized at one predetermined tilt angle $\alpha$ under each gear stage. However, the transmission mechanism can also be configured to tilt the support shaft 5 more widely thereby increasing the tilt angle $\alpha$. In this case, the rotational speed S2 of the second intermediate shaft 35 can also be synchronized with the rotational speed N4 of the fourth gear pair, in addition to the rotational speed to be synchronized with the rotational speed N2 of the second gear pair at the predetermined tilt angle $\alpha$. Alternatively, in this case, the rotational speed S1 of the first intermediate shaft 34 can be synchronized with the rotational speed N3 of the third gear pair, in addition to the rotational speed to be synchronized with the rotational speed N1 of the first gear pair at the predetermined tilt angle $\alpha$. As a result, the gear stage can be shifted directly from the first stage to the fourth stage.

The present invention should not be limited to the example thus has been explained. For example, a number of the gear stage to be set by the transmission mechanism may be more than four stages and less than four stages. Moreover, in the above explained example, the torque is transmitted from the input shaft 2 to the output discs 25 and 26. However, the transmission of the present invention may also be configured to use any one of the output discs as the input element, and to use the other output disc and the input shaft 2 as the output element. Further, in the transmission of the present invention, a belt type transmission mechanism, a roller type transmission mechanism and so on may also be used as the transmission mechanism instead of the gear pairs. Furthermore, the switching mechanism may be arranged for each transmission mechanism, and the switching mechanism may also be arranged on the output shaft or coaxially with the output shaft instead of the intermediate shaft.

**Claims**

1. A continuously variable transmission mechanism, which has a rolling member having a smooth outer face and capable of tilting a rotational center axis thereof, and a rotary member arranged to be contacted with a predetermined portion of the outer face of the rolling member in a torque transmittable manner, and which is configured to vary a rotational speed of the rotary member by tilting the rotational center axis of the rolling member to change a rotation radius of a contact point at which the rotary member is contacted with the rolling member in a torque transmittable manner, **characterized by** comprising:

a first rotary member whose outer circumferential face is contacted with the rolling member; and
a second rotary member and a third rotary member, which are contacted with the outer face of the rolling member in a torque transmittable manner at a side opposite to a side to which the first rotary member is contacted across the rotational center axis, and which are adapted to rotate relatively with the first rotary member.

2. The continuously variable transmission mechanism as claimed in claim 1, further comprising:

a tilt angle adjusting mechanism, which is adapted to incline the rolling member thereby changing an angle between the rotational center axis of the rolling member and the rotational center axis of the first rotary member in a plane including the rotational center axis of the first rotary member.

3. The continuously variable transmission mechanism as claimed in claim 1 or 2, wherein:

the second rotary member and the third rotary member are contacted with the outer face of the rolling member in a torque transmittable manner on both sides of a line passing through a center of the rolling member and a contact point at which the rolling member is contacted with the first rotary member; and
a rotational speed of one of the second and the third rotary members is lowered by inclining the rotational center axis of the rolling member in a manner to increase a rotational speed of the other rotary member.

4. A transmission using the continuously variable transmission as claimed in any of claims 1 to 3, comprising:

an input member, which is connected with the first rotary member;
a first intermediate shaft, which is connected with the second rotary member;
a second intermediate shaft, which is connected with the third rotary member;
an output member, which is connected selectively with the first intermediate shaft and the second intermediate shaft in a torque transmittable manner;
a first transmission mechanism, which is arranged between the first intermediate shaft and the output member, and which is adapted to set a ratio between rotational speeds of the first intermediate shaft and the output member to a predetermined ratio;
a first switching mechanism, which is adapted to allow and to disable the first transmission mechanism to transmit the torque selectively;
a second transmission mechanism, which is arranged between the second intermediate shaft and the output member, and which is adapted to set a ratio between rotational speeds of the second intermediate shaft and the output member to a ratio different from the ratio set by the first transmission mechanism; and
a second switching mechanism, which is adapted to allow and to disable the second transmission mechanism to transmit the torque selectively.

5. The transmission as claimed in claim 4, wherein:

the first switching mechanism includes an engagement member adapted to connect the first transmission mechanism selectively with the first intermediate shaft and the output member; and
the second switching mechanism includes another engagement member adapted to connect the second transmission mechanism selectively with the second intermediate shaft and the output member; and
the transmission further comprises
a control means, which is adapted to connect the engagement member of one of the first and the second switching mechanisms with the intermediate shafts or the output member to be connected therewith, while disconnecting the engagement member of the other switching mechanism from the intermediate shaft or the output member being connected therewith, when the rotational speed of said one of the first and the second switching mechanisms is synchronized with the rotational speed of the intermediate shaft or the output shaft to be connected therewith, under the situation where the torque is being transmitted by the other switching mechanism.

6. The transmission as claimed in claim 4 or 5, wherein:

   the first transmission mechanism and the second transmission mechanism include a pair of gears meshing with each other.

7. The transmission as claimed in any of claims 4 to 6, wherein:

   the first switching mechanism and the second switching mechanism include a dog clutch.

Fig. 1

Fig. 2

Fig.3

(a)

High Hydraulic Pressure

(b)

Low Hydraulic Pressure

Fig. 4

Fig. 5

Fig. 6

Fig. 7

# Fig. 8

| **INTERNATIONAL SEARCH REPORT** | International application No. |
|---|---|
| | PCT/JP2009/052187 |

| A. CLASSIFICATION OF SUBJECT MATTER |
|---|
| *F16H15/52*(2006.01)i, *F16H37/02*(2006.01)i |
| According to International Patent Classification (IPC) or to both national classification and IPC |

| B. FIELDS SEARCHED |
|---|
| Minimum documentation searched (classification system followed by classification symbols) |
| F16H15/52, F16H37/02 |

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| A | JP 49-012742 B1 (Hiroshi HIGASHI), 27 March, 1974 (27.03.74), Full text; all drawings (Family: none) | 1-7 |
| A | JP 47-029762 A (Hiroyuki KAWABATA), 07 November, 1972 (07.11.72), Full text; all drawings (Family: none) | 1-7 |
| A | JP 44-001098 B1 (Ki RIN), 18 January, 1969 (18.01.69), Full text; all drawings (Family: none) | 1-7 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 April, 2009 (06.04.09) | 14 April, 2009 (14.04.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

## INTERNATIONAL SEARCH REPORT

| | International application No. |
|---|---|
| | PCT/JP2009/052187 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 41-017403 B1  (Hitachi, Ltd.),<br>04 October, 1966 (04.10.66),<br>Full text; all drawings<br>(Family: none) | 1-7 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6257655 A
- JP 2008075878 A

- JP 2006527337 A